# EUROPÄISCHE PATENTSCHRIFT

(11) **EP 2 916 025 B1**
(45) Veröffentlichungstag und Bekanntmachung des Hinweises auf die Patenterteilung: **30.06.2021**
(21) Anmeldenummer: 15150416.4
(22) Anmeldetag: 08.01.2015
(51) Int. Cl.: F16D 13/75, F16D 23/00, F16D 23/12

(54) **Betätigungseinheit für eine Kupplung**
Actuating unit for a clutch
Unité d'actionnement pour un embrayage

(30) Priorität: 11.02.2014 DE 102014202422
(43) Veröffentlichungstag der Anmeldung: 09.09.2015
(73) Patentinhaber: ZF Friedrichshafen AG, 88046 Friedrichshafen (DE)
(72) Erfinder: Mäder, Fred, 97532 Üchtelhausen (DE)
(74) Vertreter: ZF Friedrichshafen AG

(56) Entgegenhaltungen:
- DE-A1- 19 950 454
- DE-T5-112004 000 398
- KR-B1- 101 293 020
- None

## Beschreibung

Die Erfindung betrifft eine Betätigungseinheit für eine Kupplung umfassend eine Antriebseinheit, ein Betätigungselement zum Betätigen der Kupplung und eine Übertragungseinheit zum Übertragen eines durch die Antriebseinheit erzeugten Drehmomentes auf das Betätigungselement, wobei die Übertragungseinheit einen Verschleißausgleichsmechanismus umfasst, durch den die Einrückposition des Betätigungselementes an den Verschleißzustand der Kupplung anpassbar ist.

Aus der DE 100 59 374 A1 geht eine Betätigungseinheit für eine Kupplung hervor, bei der ein Motor eine Schneckenverzahnung antreibt, mittels der ein Segmentzahnrad angetrieben wird. Am Segmentzahnrad befindet sich eine Gelenkaufnahme zur Aufnahme des Gelenkkopfes eines Stößels, mit dem eine Kupplung ausrückbar ist. Weiterhin umfasst die Betätigungseinheit eine Kompensationsfeder zur Verringerung der benötigten Ausrückkräfte.

Darüber hinaus ist es bekannt, derartige Betätigungseinheiten mit einem Verschleißausgleich zu versehen. Bei Kupplungsscheiben tritt nämlich mit zunehmender Benutzung ein Verschleiß derart auf, dass die Dicke der Kupplungsscheibe aufgrund des Materialabtrags abnimmt. Dadurch stellen sich die Membranfederzungen der Membranfeder, die die Anpressplatte einer Kupplungs-Druckplatte gegen die Kupplungsscheibe pressen, im eingerückten Zustand nach außen. Dementsprechend muss die Ausgangsposition des Stößels der Betätigungseinheit, der die Ausrückkraft auf die Kupplungseinheit überträgt, an den zunehmenden Verschleiß und die damit sich ändernde Position der Membranfederzungen angepasst werden. Eine Betätigungseinrichtung mit Verschleißausgleich geht beispielsweise aus der DE 1 525 335 hervor.

DE 199 50 454 A1 beschreibt eine Betätigungseinheit mit Verschleißausgleichsmechanismus. Die Angriffsposition der Kompensationsfedereinheit kann mittels einer Gewindeanordnung verändert werden.

DE 11 2004 000 398 T5 betrifft eine Kupplungsbetätigungsvorrichtung. Bei dieser ist die Betätigungseinheit mit einem Bolzen an das Aktuatorgetriebe angebunden.

Allen bekannten Betätigungseinheiten ist gemeinsam, dass die Drehbewegung eines Aktuators, insbesondere eines Elektromotors, in eine Linearbewegung des Stößels umgewandelt wird.

Ausgehend hiervon ist es Aufgabe der vorliegenden Anmeldung, eine Betätigungseinheit anzugeben, die weniger Bauraum beansprucht und bei der der Verschleißausgleichsmechanismus verbessert ist.

Diese Aufgabe wird durch eine Betätigungseinheit mit den Merkmalen des Anspruchs 1 gelöst. Dabei wird als Einrückposition die Position des Betätigungselementes angesehen, bei der die Kupplung eingerückt ist. Es handelt sich also um die Grund- oder Ruheposition, aus der das Betätigungselement zum Ausrücken startet. Bei Verschleiß stellen sich wie beschrieben die Membranfederzungen der Kupplung auf, der Kontaktpunkt wandert damit von der Kupplung weg. In diese Richtung muss mit zunehmendem Verschleiß auch die Einrückposition des Betätigungselementes verschoben werden. Zusätzlich zu dieser Verschiebung des Betätigungselementes ist nun vorgesehen, dass sich der Hebelarm zwischen Übertragungseinheit und Betätigungselement vergrößert, weshalb auch die übertragene Kraft größer wird. Damit wird ausgeglichen, dass sich nicht nur der Weg zum Ausrücken bei Verschleiß wandelt, sondern auch die aufzubringende Kraft, die mit zunehmendem Verschleiß größer wird. In der Folge kann die Antriebseinheit, die bislang die mit zunehmendem Verschleiß auftretenden Kräfte aufbringen musste, mit weniger Leistung ausgestattet werden.

Zwischen dem Übertragungselement und dem Betätigungselement liegt immer ein Hebelarm an, da die Drehbewegung der Antriebseinheit bzw. der Übertragungseinheit in eine mehr oder weniger lineare Bewegung des Betätigungselementes zu überführen ist. Dieser Hebelarm ändert sich während der Drehbewegung der Übertragungseinheit, da sich dabei der Angriffspunkt der Übertragungseinheit am Betätigungselement vom Drehpunkt der Übertragungseinheit entfernt. Im Falle des Segmentzahnrades dreht sich das den Stößel antreibende Kugelgelenk aus einer Position unterhalb des Drehpunktes mit maximalem Hebelarm Richtung Kupplung und nähert sich dabei der Drehachse des Segmentzahnrades, wodurch der Hebelarm geringer wird. Bei gleichbleibender Leistung der Antriebseinheit sinkt dabei die übertragene Kraft.

Ob die Kraft im Rahmen der Ausrückbewegung des Betätigungselementes steigt oder fällt ist primär nicht von Bedeutung. Entscheidend ist, dass mit zunehmendem Verschleiß die Kraft an der Ausrückposition ansteigt. Dies ist realisiert durch den größer werdenden Hebelarm.

Vorteilhafterweise kann der Abstand zwischen der Drehachse der Übertragungseinheit oder eines Verbindungselementes der Übertragungseinheit und der Längsachse des Betätigungselementes während der Drehbewegung der Übertragungseinheit im Wesentlichen konstant gehalten. Dadurch wird das Betätigungselement vollkommen linear bewegt, wodurch das Gehäuse im der Kupplung zugwandten Abschnitt kompakter gebaut werden kann, da der Stößel bzw. das Betätigungselement keine Auf- und Abbewegung mehr durchführt. Dadurch, dass das Betätigungselement eine Linearbewegung durchführt, ist weiterhin die Reibung zwischen dem Betätigungselement und der Kupplung bzw. dem Ausrücklager, an dem das Betätigungselement angreift, verringert. Das Verbindungselement ist ein Teil der Übertragungseinheit und zwar derjenige, der mit dem Betätigungselement in Eingriff steht.

Vorzugsweise die Übertragungseinheit das Betätigungselement an einer Angriffsposition angreifen, wobei die Angriffsposition während der Drehbewegung der Übertragungseinheit veränderbar ist. Bei bekannten Betätigungseinheiten, wie oben beschrieben, nimmt eine am als Verbindungselement verwendeten Schneckenrad befestigte Gelenkpfanne den Stößel auf. Die Angriffsposition des Verbindungselementes ist damit der Gelenkkopf des Stößels, der sich zwar in der Gelenkpfanne während der Drehbewegung des Schneckenrades dreht, die Gelenkpfanne aber nicht verlässt. Im Gegensatz dazu ist in Weiterbildung der Erfindung vorgesehen, dass die Angriffsposition des Verbindungselementes am Betätigungselement während der Drehbewegung des Verbindungselementes verändert wird. Dies bedeutet, dass das am Betätigungselement angreifende Teil des Verbindungselementes seine Relativposition zum Betätigungselement verändert.

Die Übertragungseinheit weist wie beschrieben einen Verschleißausgleichmechanismus auf, durch den die Grundposition des Betätigungselementes an den Verschleißzustand der Kupplung anpassbar ist. Die beschriebenen Vorteile betreffend die Linearbewegung des Betätigungselementes sind unabhängig vom Vorhandensein eines Verschleißausgleichmechanismus. Dieser sorgt jedoch dafür, dass die Grund- bzw. Ausgangsposition des Betätigungselementes an den Verschleißzustand der Kupplung angepasst wird. Wie oben bereits beschrieben, verlagern sich die Membranfederzungen der Kupplung aufgrund des Verschleißes der Kupplungsscheibe im eingerückten Zustand nach außen, das heißt von der Kupplungsscheibe weg. Die Grundposition des Betätigungselementes, das ist dementsprechend die Position, in der das Betätigungselement im eingerückten Zustand über einen Ausrückhebel oder eine Ausrückgabel am Ausrücklager der Kupplung angreift, muss also derart angepasst werden, dass sich die Grundposition oder Einrückposition des Betätigungselementes mit zunehmendem Verschleiß von der Kupplungsscheibe entfernt. Hierzu dient ein Verschleißausgleichmechanismus.

Vorteilhafterweise kann das Verbindungselement scheibenförmig ausgebildet sein und auf der Seite des Bedienungselementes wenigstens einen Vorsprung aufweisen. Dadurch wird die Aufgabenverteilung in Bezug auf die wechselseitige Aufnahme vertauscht. Dabei kann der Vorsprung grundsätzlich beliebige Formen annehmen. Beispielsweise kann er quaderförmig ausgebildet sein. Bevorzugt ist jedoch vorgesehen, dass der Vorsprung bolzenförmig ist. Aufgrund der zylindrischen Ausgestaltung weist die Mantelfläche des Vorsprungs keinerlei Kanten oder Ecken auf. Da der Vorsprung im Vergleich zum Betätigungselement auch eine Rotationsbewegung ausführt, kann dadurch der Verschleiß vermindert werden.

Mit Vorteil können zwei Vorsprünge vorgesehen sein, die von der Drehachse des Verbindungselementes gleich beabstandet sind. Die Vorsprünge übertragen dementsprechend das gleiche Drehmoment. Durch die Verwendung zweier Vorsprünge kann der Winkel der Drehbewegung, bei dem das Verbindungselement das Betätigungselement antreibt, vergrößert werden. Insbesondere wird es dadurch möglich, dass das Verbindungselement auch Rotationsbewegungen um mehr als 180° durchführt, was mit einer Gelenkpfanne nicht möglich ist. Deren Bewegung ist per se auf 180° beschränkt, aufgrund praktischer Limitationen sinkt der verwendbare Winkelbereich der Drehbewegung auf deutlich unter 180°. Durch die Verwendung von Vorsprüngen lässt sich dagegen ein beliebiger Drehwinkel realisieren, es sind lediglich genügend Vorsprünge in Umfangsrichtung vorzusehen.

Mit besonderem Vorteil können zwei Vorsprünge vorgesehen sein, die von der Drehachse des Verbindungselementes bzw. der Übertragungseinheit unterschiedlich beabstandet sind. Das Verbindungselement als Teil der Übertragungseinheit hat zumeist dieselbe Drehachse. Daher kann man sich sowohl auf die Drehachse des Verbindungselementes wie auch die der Übertragungseinheit beziehen, ohne dass technisch ein Unterschied entsteht. Bevorzugt ist der beim Ausrücken zuerst angreifende Vorsprung näher an der Drehachse gelagert als der zweite Vorsprung. Bezogen auf die Einrückposition im Neuzustand der Kupplung ist der zuerst angreifende Vorsprung normalerweise der in Drehrichtung kupplungsseitige Vorsprung. Beim Wechsel zum zweiten Vorsprung steigt dabei automatisch der Hebelarm.

Vorteilhafterweise kann das Betätigungselement wenigstens eine Ausnehmung zur zumindest zeitweisen Aufnahme eines Vorsprungs des Verbindungselementes der Übertragungseinheit aufweisen. Die Ausnehmung kann das Betätigungselement auf gesamter Breite beaufschlagen, die Ausnehmung kann aber auch wie ein Sackloch ausgebildet sein, das heißt nur in einer Tiefe in das Betätigungselement eindringen, die geringer ist, als die Breite des Betätigungselementes. Dies bedeutet aber nicht, dass die Grundfläche der Ausnehmung kreisförmig sein soll oder sein muss.

Vielmehr ist vorzugsweise vorgesehen, dass die Ausnehmung in Form eines Langlochs ausgebildet ist. Alternativ kann die Ausnehmung in Form eines zu einer Seite offenen Langlochs ausgebildet sein. Diese Ausgestaltung ermöglicht, dass der Vorsprung des Verbindungselementes in der Ausnehmung verschiebbar ist, wodurch eine Relativbewegung des Vorsprungs im Vergleich zum Betätigungselement ermöglicht ist. Diese Ausgestaltung der Verbindung des Verbindungselementes mit dem Betätigungselement ermöglicht auf einfache Art und Weise, dass das Betätigungselement linear bewegt wird. Die Bewegungsanteile senkrecht zur Richtung der Linearbewegung werden dann durch die Verschiebung des Vorsprungs in der Ausnehmung abgefangen.

Alternativ ist es auch möglich, dass die Ausnehmung einen kreisförmigen Querschnitt aufweist und der Vorsprung am Verbindungselement verschiebbar befestigt ist. Dabei ist denkbar, dass der Vorsprung einen Hinterschnitt aufweist, der in einer am Verbindungselement vorhandenen Schiene verschiebbar fixiert ist. Mit der Ausgestaltung der Ausnehmung als Langloch und der dementsprechenden Möglichkeit, den Vorsprung starr am Verbindungselement zu fixieren oder diese auch einstückig auszubilden ist aber aufgrund der Einfachheit in der Herstellung bevorzugt.

Vorteilhafterweise kann die Längsrichtung der Ausnehmung senkrecht zur Längsrichtung des Betätigungselementes angeordnet sein. Aufgrund dieser Ausgestaltung können, wie bereits beschrieben, alle Bewegungen des Vorsprungs senkrecht zur Richtung der Linearbewegung des Betätigungselementes aufgefangen werden, so dass eine Bewegbarkeit des Betätigungselementes, die nicht in der Richtung der Linearbewegung liegt, nicht mehr nötig ist. Dadurch kann wie beschrieben, der Bauraum der Betätigungseinheit dahin gehend verringert werden, dass das Gehäuse im Bereich des Betätigungselementes einen geringeren Durchmesser aufweisen kann. Vorteilhafterweise kann das Betätigungselement eine ringförmige Versteifung aufweisen, die senkrecht zur Drehachse des Verbindungselementes der Übertragungseinheit angeordnet ist. Da die Betätigungseinheit eine oder mehr Ausnehmungen aufweist, die insbesondere auch noch länglich ausgebildet sind, kann die Steifigkeit des Betätigungselementes insbesondere bei Druckbeaufschlagung in Mitleidenschaft gezogen werden. Diese Steifigkeit kann durch das Vorsehen der Versteifung wieder erhöht werden. Die Versteifung ist ringförmig, damit die Vorsprünge des Verbindungselementes auch nach Austritt der Vorsprünge aus den Langlöchern bzw. Ausnehmungen frei bewegt werden können.

Vorteilhafterweise ist bei Vorhandensein wenigstens zweier Ausnehmungen die Länge der Ausnehmungen in Abhängigkeit des Winkelabstandes der Vorsprünge des Verbindungselementes festgelegt. Die Festlegung kann derart erfolgen, dass zu jedem Punkt der Drehbewegung des Verbindungselementes immer ein Vorsprung am Betätigungselement angreift. Ansonsten kann es vorkommen, dass die Vorsprünge mit den Ausnehmungen verklemmen.

Vorteilhafterweise kann das Verbindungselement eine zylindrische Form besitzen und eine Schlingfeder mit mehreren Wicklungen um die Außenseite gebunden sein. Die Schlingfeder kann durch einen Anschlag derart festgezogen werden, dass sie das Verbindungselement in Ausrückrichtung beaufschlagt, beim Einrücken am Ende der Drehbewegung aber Spiel lässt, so dass das Verbindungselement im Vergleich zur Antriebseinheit verdreht werden kann, wodurch die Grundposition des Verbindungselementes an einen Verschleiß der Kupplung angepasst wird.

Diesbezüglich ist weiterhin vorteilhaft vorgesehen, dass das Verbindungselement in einem Zahnradsegment gelagert ist, wobei das Zahnradsegment die gleiche Drehachse aufweist, wie das Verbindungselement. Mit der Schlingfeder ist es dabei möglich, die Relativposition des Verbindungselementes zum Zahnradsegment zu verändern, so dass sich das Zahnradsegment und das Verbindungselement nicht fest miteinander drehen müssen bzw. das Zahnradsegment und das Verbindungselement nicht miteinander fixiert sein müssen.

In einer alternativen Ausgestaltung ist es möglich, dass das Verbindungselement selbst als Zahnradsegment ausgestaltet ist. Das heißt, dass sich auf der Außenseite des Verbindungselementes derartige Rillen, bzw. Vertiefungen befinden, dass das Verbindungselement mit einem Schneckentrieb antreibbar ist.

Vorzugsweise kann die Übertragungseinheit eine Kompensationsfedereinheit aufweisen, die am Zahnradsegment oder in der alternativen Ausgestaltung am Verbindungselement angreift. Mit dieser Kompensationfedereinheit, die vorzugsweise eine Federführung, ein Gelenklager und die Kompensationsfeder umfasst, ist es möglich, die Leistung der Antriebseinheit zu minimieren. Die Kompensationsfedereinheit bildet dabei den Gegenpart zur Membranfeder, die abgesehen von geringfügigen Unterschieden, zur Sicherung einer Vorzugsposition mit betragsmäßig gleich großen aber entgegengesetzten Drehmomenten auf das Verbindungselement einwirken. Daher muss der die Antriebseinheit nur noch sehr geringer Drehmomente übertragen, um ein Ausrücken oder Einrücken der Kupplung zu bewirken. Ohne Kompensationsfedereinheit müsste die Antriebseinheit ansonsten das gesamte Drehmoment zum Ausrücken der Kupplung bereitstellen, was aus Kostengründen nachteilig ist.

Daneben betrifft die Erfindung auch ein Kraftfahrzeug mit einer Betätigungseinheit wie oben beschrieben.

Weitere Vorteile, Merkmale und Einzelheiten ergeben sich aus den im Folgenden beschriebenen Ausführungsbeispielen und Figuren.

Dabei zeigen:
- Figur 1: ein Betätigungselement als Explosionszeichnung,
- Figur 2: ein Zahnradsegment,
- Figur 3: einen Mitnehmer,
- Figur 4: einen Stößel,
- Figur 5: eine Betätigungseinheit in Grundposition,
- Figur 6: eine in Betätigungsrichtung bewegte Betätigungseinheit,
- Figur 7: eine Betätigungseinheit in Grundposition bei einer verschlissenen Kupplung,
- Figur 8: eine in Betätigungsrichtung bewegte Betätigungseinheit bei einer verschlissenen Kupplung,
- Figur 9: eine Ausrückkraftkennlinie einer Kupplung,
- Figur 10: eine Kennlinie des in den Mitnehmer eingeleiteten Drehmomentes,
- Figur 11: eine Kennlinie des Kompensationsmomentes,
- Figur 12: eine Kennlinie der Länge des Hebelarmes, und
- Figur 13: den Mitnehmer in einer zweiten Ausgestaltung.

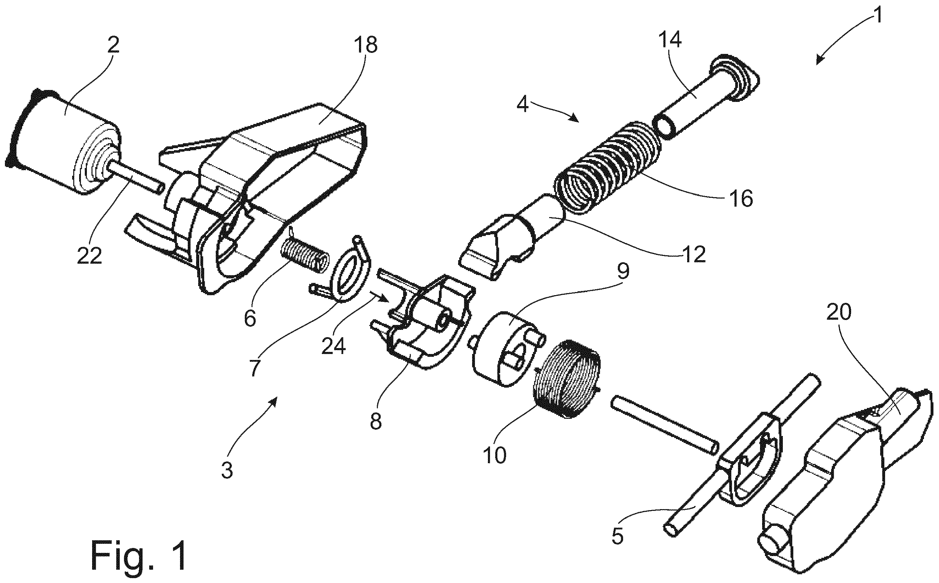

Figur 1 zeigt eine Betätigungseinheit 1 mit einem Elektromotor 2 als Antriebseinheit, eine Übertragungseinheit 3, eine Federkompensationseinheit 4 und einem Stößel 5 als Betätigungselement.

Die Übertragungseinheit 3 umfasst eine Vorlastfeder 6, eine Anschlagfeder 7, ein Zahnradsegment 8, einen Mitnehmer 9 als Verbindungselement und eine Schlingfeder 10. Die Kompensationsfedereinheit 4 weist ein Gelenklager 12, eine Federführung 14 und eine Kompensationsfeder 16 auf.

Weiterhin weist die Betätigungseinheit 1 ein Gehäuse 18 zur Aufnahme der Bauteile der Übertragungseinheit 3 wie auch der Kompensationsfedereinheit 4 sowie des Stößels 5 auf; das Gehäuse 18 ist mit einem Deckel 20 verschlossen. Im Folgenden wird die Funktionsweise der Betätigungseinheit 1 für eine gedrückte Kupplung beschrieben. Die Betätigungseinheit 1 kann jedoch durch Vornahme von Modifikationen auch für eine gezogene Kupplung eingesetzt werden. Die Modifikationen betreffen dabei die Ansteuerung des Elektromotors 2 sowie die Ausgestaltung des Stößels 5. Diese Modifikationen sind grundsätzlich bekannt und bedürfen daher keiner weiteren Erläuterung.

Die Funktionsweise der Betätigungseinheit 1 ist für eine gedrückte Kupplung wie folgt:
Die Grund- oder Ausgangsposition des Stößels 5 ist derart, dass er im eingerückten Zustand der Kupplung an der Kontaktposition zur Ausrückeinheit anliegt. In dieser Position wird der Stößel von der Kompensationsfedereinheit 4 fixiert, da diese so gelagert ist, dass sie das Zahnradsegment in einer Einkuppelposition vorbelastet. Wenn im Folgenden von einer Einkuppel- oder Auskuppelposition die Rede ist, bedeutet dies, dass die Betätigungseinheit 1 so eingestellt ist, dass sich die Kupplung im eingekuppelten oder ausgekuppelten Zustand befindet. Die Einkupplung oder Auskupplung bezieht sich also auf den Zustand der Kupplung und nicht auf die Position der Teile der Betätigungseinheit 1 an sich. Analog werden die Begriffe Einrück- und Ausrückposition verwendet.

Zum Auskuppeln erhält der Elektromotor 2 ein Signal, woraufhin dieser um einen vorgegebenen Umfangswinkel verdreht wird. Dabei kämmt die Stirnradverzahnung 22 mit der Außenseite des Zahnradsegmentes 8 und überträgt auf dieses ein Drehmoment. Das Drehmoment, dass der Elektromotor aufbringt, ist ausreichend um die durch die Kompensationsfedereinheit 4 bzw. der Kompensationsfeder 16 aufgebrachte Kraft zu überwinden. Da die Kompensationsfedereinheit 4 bzw. das Gelenklager 12 nahe bei der Drehachse 24 des Zahnradsegments 8 angreift, ist das darauf zu bringende Drehmoment nicht übermäßig groß. Nachdem die Kompensationsfedereinheit 4 bzw. deren Angriffspunkt am Zahnradsegment 8 über die Drehachse 24 gedreht wurde, unterstützt die Kompensationsfedereinheit 4 die Ausrückbewegung. Durch die Drehung des Zahnradsegmentes 8 wird die Schlingfeder 10, deren Enden jeweils an einem Anschlag des Zahnradsegmentes 8 aufliegen, zusammen gezogen und in reibschlüssige Verbindung mit dem Mitnehmer 9 gebracht. Dabei umschlingen die Windungen der Schlingfeder 10 die Außenseite des Mitnehmers 9, wobei zwischen der Außenseite des Mitnehmers 9 und der Innenseite des Zahnradsegmentes 8 ein genügender Abstand verbleibt, so dass in diesem Zwischenraum die Schlingfeder genügend Spiel besitzt, um beim Einkuppeln die Umschlingung wieder lösen zu können, in dem durch Aufweitung des Durchmessers der Reibschluss zum Mitnehmer 9 unterbrochen wird. Durch die richtige Auslegung der Anschläge des Zahnradsegmentes 8 und der Schlingfeder kann so auch ein Verschleißausgleichmechanismus realisiert werden.

Im Folgenden werden das Zahnradsegment 8, der Mitnehmer 9 und die Schlingfeder 10 sowie der Stößel 5 näher beschrieben.

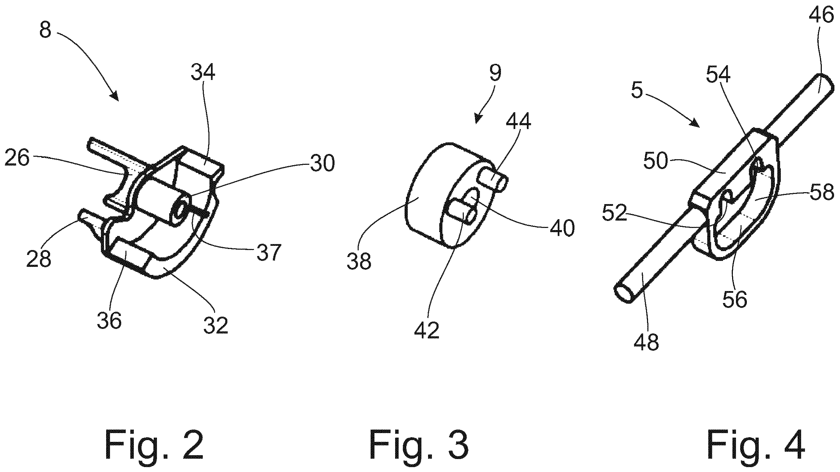

Figur 2 zeigt das Zahnradsegment 8, das elektromotorseitig zwei Anschläge 26 und 28 für die Anschlagfeder 7 besitzt. Stößelseitig befindet sich dagegen ein Lagerbolzen 30 sowie eine segmentierte Ringwandung 32. Der Lagerbolzen 30 ist zylindrisch geformt, so dass der Mitnehmer 9 auf dem Lagerbolzen 30 drehbar gelagert werden kann. Auf der Außenseite weist die Ringwandung 32 eine Stirn-Verzahnung auf, die mit der Stirnradverzahnung 22 des Elektromotors 2 kämmt. Auf der Innenseite ist die Ringwandung 32 glatt ausgebildet. Die seitlichen Enden 34 und 36 der Ringwandung 32 begrenzen diese. Die Schlingfeder 10 sitzt mit einem Ende in einer Nut 37 in der Ringwandung 32, das andere Ende ist grundsätzlich frei drehbar. Die Schlingfeder 10 weist eine Vorspannung gegenüber dem Mitnehmer 9 auf und nimmt diesen mit. Zum Entsperren und Verschleißnachstellen entriegelt das zweite Ende der Schlingfeder 10 in der Grundstellung gegen die Gehäusewandung des Gehäuses 18.

Figur 3 zeigt den Mitnehmer 9, der einen zylindrischen Grundkörper 38 mit einer Ausnehmung 40 aufweist. Bevorzugt durchgreift die Ausnehmung 40 den Grundkörper 38 auf gesamter Länge. Die Ausnehmung 40 legt aufgrund der Lagerung des Mitnehmers 9 am Lagerbolzen 30 die Drehachse des Mitnehmers 9 fest. Stößelseitig besitzt der Mitnehmer 9 zwei Antriebsbolzen 42 und 44. Diese stehen in Eingriff mit entsprechenden Ausnehmungen des Stößels 5, der im Folgenden beschrieben ist.

Figur 4 zeigt einen Stößel 5 in einer perspektivischen Ansicht. Dieser hat zwei Lagerabschnitte 46 und 48 sowie einen Mittelabschnitt 50. Die Lagerabschnitte 46 und 48 sind bevorzugt zylindrisch ausgebildet, sie können jedoch aufgrund der ausschließlichen Linearbewegung des Stößels 5 auch eine andere Grundform als die eines Kreises aufweisen. Beispielsweise können die Lagerabschnitte 46 und 48 auch als Quader ausgebildet sein und einen rechteckigen oder quadratischen Querschnitt besitzen. Die Länge der Lagerabschnitte 46 und 48 ist bevorzugt gleich groß, jedoch können die Lagerabschnitte 46 und 48 auch unterschiedliche Längen aufweisen.

Der Mittelabschnitt 50 besitzt zwei u-förmige Ausnehmungen 52 und 54, die in eine darunter liegende großräumige Ausnehmung 56 münden. Dabei ist mit "darunter liegend" lediglich die Abbildung gemäß Figur 4 beschrieben, selbstverständlich kann die Ausnehmung 56 in Abhängigkeit der Einbaulage der Betätigungseinheit 1 auch neben oder über den Ausnehmungen 52 und 54 liegen. Die Ausnehmung 56 wird auf beiden Seiten und der Unterseite durch einen ringförmigen Versteifungsabschnitt 58 begrenzt. Dabei sind die Ausnehmungen 52 und 54 mit besonderem Vorteil zwischen dem Lagerabschnitt 46 und dem Lagerabschnitt 48 angeordnet, so dass der Kraftübertrag vom Mitnehmer 9 auf den Stößel 5 an einer Fläche erfolgt, die in weiterer Verlängerung durch die Lagerabschnitte 46 und 48 abgedeckt ist. Dadurch ist der Kraftübertrag dahingehend verbessert, dass die Kraftübertragung in der gleichen Ebene liegt, wie die Kraftübertragung von Stößel auf den Ausrücker, weshalb Querkräfte vermieden werden und so die Kraftübertragung optimiert ist. Der Versteifungsabschnitt 58 ist ringförmig, um Bewegungsfreiheit für die Antriebsbolzen 42 bzw. 44 zu lassen. Wie in den folgenden Figuren noch gezeigt wird, ist diese Bewegungsfreiheit erforderlich, damit immer nur ein Antriebsbolzen den Stößel 5 antreibt.

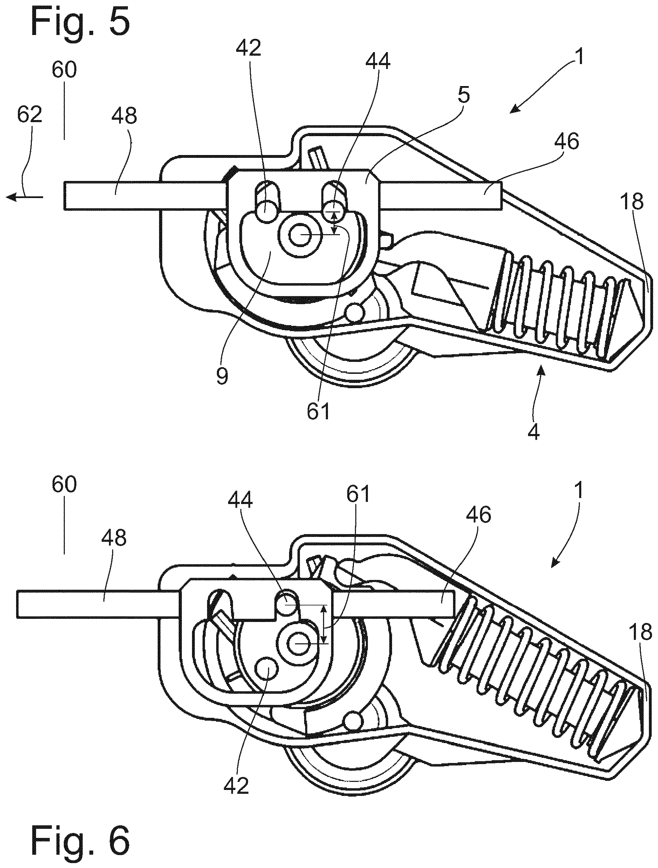

Figur 5 zeigt die Betätigungseinheit 1 in Grundposition, das heißt, dass die Kupplung eingerückt ist. Die Einrück- oder Grundposition für eine Kupplung im Neuzustand wird dabei über die Markierung 60 angezeigt. Der Pfeil 62 gibt die Richtung an, in der der Stößel 5 zu bewegen ist, um die Kupplung auszukuppeln. Der Hebelarm 61 zwischen der Drehachse 63 der Übertragungseinheit 3 bzw. des Mitnehmers 9 und dem Angriffspunkt 65 der Übertragungseinheit 3 am Stößel 5 ist ebenfalls ersichtlich.

Figur 6 zeigt die Betätigungseinheit gemäß Figur 5, wobei der Stößel in Betätigungsrichtung bewegt wurde. Dementsprechend ragt der Lagerabschnitt 48 über die Markierung 60 hinaus, während das Ende des Lagerabschnitts 46 innerhalb des Gehäuses 18 liegt und nicht mehr teilweise außerhalb. Durch weiteren Vergleich der Figuren 5 und 6 kann man erkennen, dass im Neuzustand der Kupplung, auf den ebenfalls Figur 6 bezogen ist, im Wesentlichen der Antriebsbolzen 44 den Stößel 5 antreibt. Der Antriebsbolzen 42 bewegt sich dagegen frei in der Ausnehmung 58. Diese Endposition kann auch als Ausrückposition oder Betriebsposition bezeichnet werden. Um von dieser Betriebsposition wieder in die Grundposition zurück zu gelangen, wird der Elektromotor 2 in Gegenrichtung bewegt. Die Kupplung übt sowieso einen Druck entgegen der Betätigungsrichtung 62 aus, gegen diese Kraft arbeitet und damit in Betätigungsrichtung die Kompensationsfeder 16. Der Elektromotor 2 muss daher nur ein geringes Drehmoment aufbieten, um die Betätigungseinheit 1 von der Betätigungsposition in die Grundposition zurückzuführen. Dabei hat sich der Hebelarm 61 vergrößert, was aber unabhängig von einem Verschleißausgleich geschah, weshalb sich der Hebelarm 61 in der Einrückposition, wie sie in Figur 5 zu sehen ist, nicht ändert.

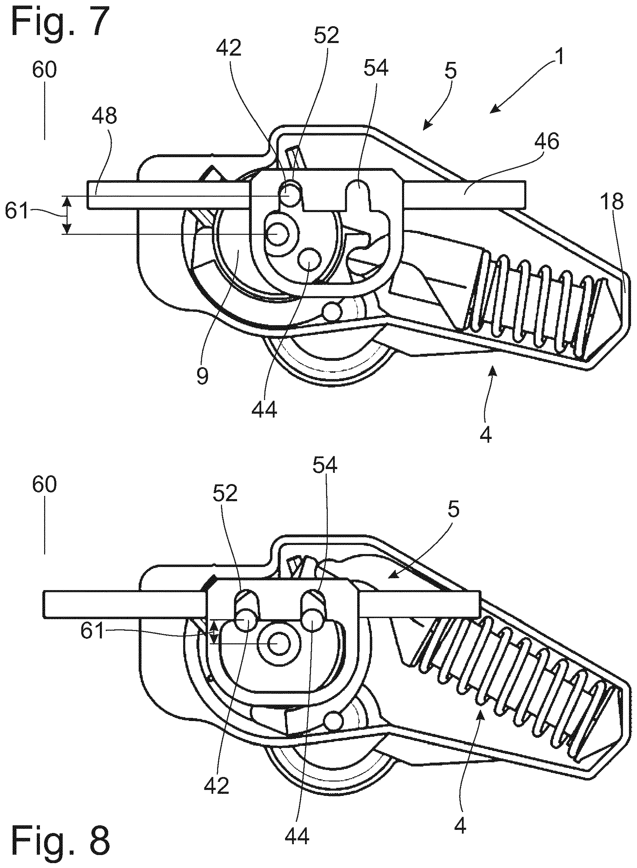

Figur 7 zeigt eine Betätigungseinheit 1 in Grundposition bzw. Einrückposition für eine Kupplung mit Verschleiß. Wie bereits beschrieben, führt der Verschleiß der Kupplungsscheibe dazu, dass in der Einrückposition die Membranfederzungen weiter nach außen gestellt werden. Dementsprechend muss der Angriffspunkt der Betätigungseinheit 1 weiter von der Kupplungsscheibe entfernt liegen, was sich dadurch zeigt, dass der Stößel 5 in der Einrückposition bei Verschleiß weiter in das Gehäuse 18 gerückt ist. Dementsprechend erreicht der Lagerabschnitt 48 die Markierung 60 nicht. Dieser Wechsel der Einrückposition geht mit einer Verdrehung der Ausgangsposition und des Mitnehmers 9 einher. Dadurch ist zu Beginn der Ausrückbewegung nunmehr der Antriebsbolzen 42 mit dem Stößel 5 bzw. der Ausnehmung 52 in Eingriff. Durch Verdrehen des Mitnehmers 9 entgegen dem Uhrzeigersinn wird der Stößel in Betätigungsrichtung 62 verschoben. Erst der Wechsel der Einrückposition des Mitnehmers 9 verändert den Hebelarm 61 in der Einrückposition. Der Hebelarm 61 in der Einrückposition ist mit zunehmendem Verschleiß größer geworden.

Figur 8 zeigt die Betätigungseinheit 1 gemäß Figur 7 in Betätigungsposition. Der Lagerabschnitt 48 erreicht dabei gerade noch die Markierung 60 und entspricht damit der in Figur 5 als Grundposition gezeigten Position des Stößels 5. Jedoch ist im Unterschied zu Figur 5 die Kompensationsfedereinheit 4 ausgefahren.

Die Anordnung der Antriebsbolzen 42 und 44 gemäß Grundposition und Betriebsposition ist dabei relativ willkürlich, wesentlich ist lediglich, dass entweder der Antriebsbolzen 42 oder der Antriebsbolzen 44 mit einer der Ausnehmungen in Verbindung steht. Eine Ausnahme gibt es lediglich für die in den Figuren 5 und 8 gezeigte Position, bei der der Antriebsbolzen 42 gerade noch und der Antriebsbolzen 44 gerade erst mit der jeweiligen Ausnehmung 52 bzw. 54 in Eingriff steht. Stünden die beiden Antriebsbolzen 42 und 44 aber längere Zeit gleichzeitig mit dem Stößel 5 in Wirkverbindung, so würde sich der Mitnehmer 9 über die Antriebsbolzen 42 und 44 mit dem Stößel 5 verkeilen. Das heißt, dass nur bei Übergabe der Antriebsleistung von einem Antriebsbolzen auf den nächsten ein gleichzeitiger Angriff von zwei Antriebsbolzen vorhanden ist.

Die Figuren 5 bis 8 zeigen eine bevorzugte Ausgestaltung mit zwei Antriebsbolzen 42 und 44 und zwei Ausnehmungen 52 und 54. Es ist jedoch möglich, die Anzahl der Antriebsbolzen und damit den Verdrehwinkel des Mitnehmers zu erhöhen. Die Anzahl der Antriebsbolzen hängt dabei vom Durchmesser des Mitnehmers 9 ab. Je kleiner dessen Durchmesser ist, desto mehr Antriebsbolzen werden benötigt. Des Weiteren hängt die Anzahl der zu verwendenden Antriebsbolzen davon ab, wie groß der Ausrückweg ist. Je länger der Ausrückweg ist, desto mehr Antriebsbolzen werden benötigt.

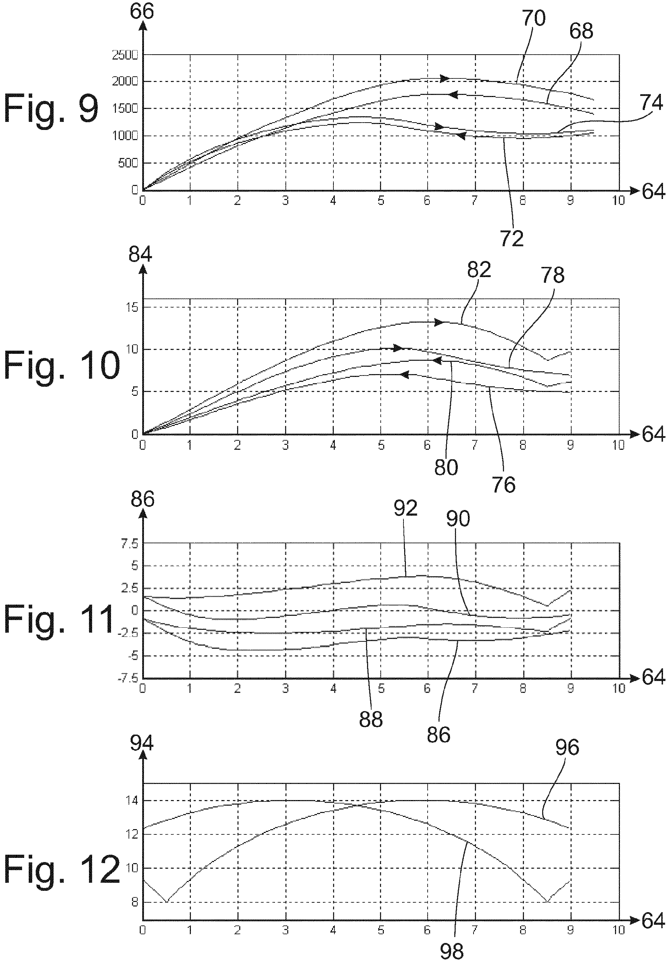

Die Figuren 9 bis 12 zeigen Kompensationskennlinien der Betätigungseinheit 1.

Figur 9 zeigt die Ausrückkraft am Ausrücklager, wobei auf der Achse 64 der Ausrückweg am Ausrücklager in Millimetern und entlang der Achse 66 die Ausrückkraft in Newton angegeben ist. Die Linien 68 und 70 beziehen sich dabei auf eine Kupplung im Neuzustand und die Linien 72 und 74 auf eine Kupplung mit verschlissener Kupplungsscheibe.

Figur 10 zeigt die entsprechenden Linien 80 und 82 für eine verschlissene und die Linien 76 und 78 für eine neue Kupplung. Dabei ist auf der Achse 84 das eingeleitete Drehmoment aufgezeichnet. Wie man erkennt, sind bei einer neuen Kupplung die Kräfte sowohl in Ausrück- als auch in Einrückrichtung niedriger als bei einer verschlissenen Kupplung.

Bei Figur 11 ist auf der Achse 86 das Kompensationsmoment in Newtonmetern gegen den Ausrückweg auf Achse 64 aufgetragen. Die Linien 86 und 90 zeigen dabei das Kompensationsmoment für eine neue und die Linien 88 und 92 das Kompensationsmoment für eine verschlissene Kupplung.

Der Wechsel des Hebelarms 61 ist in Figur 12 gezeigt. Auf der Achse 94 ist dabei die Hebelarmlänge in mm aufgetragen, wobei die Achse 94 nicht bei 0 beginnt. Die Linie 96 zeigt dabei die Hebelarmlänge für eine neue Kupplung und die Linie 98 die Hebelarmlänge für eine verschlissene Kupplung. Man kann erkennen, dass die Hebelarmlänge bei kleinen Ausrückwegen kleiner ist als bei einer verschlissenen Kupplung und dementsprechend zu Beginn der Ausrückbewegung wenig Kraft übertragen wird. Demgegenüber ist der Kraftübertrag bei größeren Ausrückwegen größer als bei einer verschlissenen Kupplung.

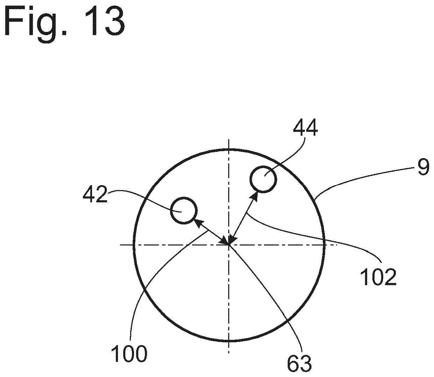

Figur 13 zeigt eine alternative Anordnung des Mitnehmers 9. Bei diesem sind die Abstände 100 und 102 der Antriebsbolzen 42 und 44 von der Drehachse 63 unterschiedlich. Dadurch ist der mit dem Antriebsbolzen 42 erzeugbare Hebelarm weiter von der Drehstellung des Mitnehmers 9 zum Stößel 5 abhängig, der maximale Hebelarm ist aber kleiner als der mit dem Antriebsbolzen 44 maximale erzeugbare Hebelarm.

Durch die beschriebene Betätigungseinheit 1 wird der Abstand der Ausrückkraftkennlinien zwischen neuem und verschlissenem Zustand der Kupplung und damit die Spreizung des Kompensationsmomentes verringert. Somit wird die Belastung des Elektromotors sowohl im Neuzustand wie auch im verschlissenen Zustand verringert.

### Bezugszeichen

1 Betätigungseinheit
2 Elektromotor
3 Übertragungseinheit
4 Kompensationsfedereinheit
5 Stößel
6 Vorlastfeder
7 Anschlagfeder
8 Zahnradsegment
9 Mitnehmer
10 Schlingfeder
12 Gelenklager
14 Federführung
16 Kompensationsfeder
18 Gehäuse
20 Deckel
22 Stirnradverzahnung
24 Drehachse
26 Anschlag
28 Anschlag
30 Lagerbolzen
32 Ringwandung
34 seitliches Ende
36 seitliches Ende
37 Nut
38 Grundkörper
40 Ausnehmung
42 Antriebsbolzen
44 Antriebsbolzen
46 Lagerabschnitt
48 Lagerabschnitt
50 Mittelabschnitt
52 Ausnehmung
54 Ausnehmung
56 Ausnehmung
58 Versteifungsabschnitt
60 Markierung
62 Pfeil
64 Achse
66 Achse
68 Linie
70 Linie
72 Linie
74 Linie
76 Linie
78 Linie
80 Linie
82 Linie
84 Achse
86 Linie
88 Linie
90 Linie
92 Linie
94 Achse
96 Linie
98 Linie
100 Abstand
102 Abstand

## Patentansprüche

1. Betätigungseinheit (1) für eine Kupplung umfassend eine Antriebseinheit (2), ein Betätigungselement (5) zum Betätigen der Kupplung und eine Übertragungseinheit (3) zum Übertragen eines durch die Antriebseinheit (2) erzeugten Drehmomentes auf das Betätigungselement (5), wobei die Übertragungseinheit (3) einen Verschleißausgleichsmechanismus (10) umfasst, durch den die Einrückposition des Betätigungselementes (5) an den Verschleißzustand der Kupplung anpassbar ist, **dadurch gekennzeichnet, dass** sich der Hebelarm zwischen Übertragungseinheit (3) und Betätigungselement (5) mit Wechsel der Einrückposition aufgrund einer Verschleißausgleichsanpassung vergrößert.

2. Betätigungseinheit nach Anspruch 1, **dadurch gekennzeichnet, dass** die Übertragungseinheit (3) das Betätigungselement (5) an einer Angriffsposition angreift, die während der Drehbewegung des Verbindungselementes (42, 44) veränderbar ist.

3. Betätigungseinheit nach einem der vorangehenden Ansprüche, **dadurch gekennzeichnet, dass** die Übertragungseinheit (3) ein Verbindungselement (9) umfasst, das scheibenförmig ausgebildet ist und auf der Seite des Betätigungselementes (5) wenigstens einen Vorsprung (42, 44) aufweist.

4. Betätigungseinheit nach Anspruch 3, **dadurch gekennzeichnet, dass** der Vorsprung (42, 44) bolzenförmig ist.

5. Betätigungseinheit nach Anspruch 3 oder 4, **dadurch gekennzeichnet, dass** zwei Vorsprünge (42, 44) vorgesehen sind, die von der Drehachse des Verbindungselementes (9) gleich beabstandet sind.

6. Betätigungseinheit nach Anspruch 3 oder 4, **dadurch gekennzeichnet, dass** zwei Vorsprünge (42, 44) vorgesehen sind, die von der Drehachse des Verbindungselementes (9) unterschiedlich beabstandet sind.

7. Betätigungseinheit nach einem der Ansprüche 3 bis 6, **dadurch gekennzeichnet, dass** das Betätigungselement (5) wenigstens eine Ausnehmung (52, 54) zur zumindest zeitweisen Aufnahme eines Vorsprungs (42, 44) des Verbindungselementes (9) der Übertragungseinheit (3) aufweist.

8. Betätigungseinheit nach Anspruch 7, **dadurch gekennzeichnet, dass** die Ausnehmung (52, 54) in Form eines Langlochs ausgebildet ist.

9. Betätigungseinheit nach Anspruch 7, **dadurch gekennzeichnet, dass** die Ausnehmung (52, 54) in Form eines zu einer Seite offenen Langlochs ausgebildet ist.

10. Betätigungseinheit nach einem der Ansprüche 7 bis 9, **dadurch gekennzeichnet, dass** die Längsrichtung der Ausnehmung (52, 54) senkrecht zur Längsrichtung des Betätigungselementes (5) angeordnet ist.

11. Betätigungseinheit nach einem der Ansprüche 7 bis 10, **dadurch gekennzeichnet, dass** das Betätigungselement (5) eine ringförmige Versteifung (58) aufweist, die senkrecht zur Drehachse des Verbindungselementes (9) der Übertragungseinheit (3) angeordnet ist.

12. Betätigungseinheit nach einem der Ansprüche 3 bis 11, **dadurch gekennzeichnet, dass** das Verbindungselement (9) eine zylindrische Form besitzt und eine Schlingfeder (10) mit mehreren Wicklungen um die Außenseite gewunden ist.

13. Betätigungseinheit nach einem der Ansprüche 3 bis 12, **dadurch gekennzeichnet, dass** das Verbindungselement (9) in einem Zahnradsegment (8) gelagert ist, wobei das Zahnradsegment (8) die gleiche Drehachse aufweist wie das Verbindungselement (9).

14. Betätigungseinheit nach Anspruch 13, **dadurch gekennzeichnet, dass** die Übertragungseinheit (3) eine Kompensationsfedereinheit (4) aufweist, die am Zahnradsegment (8) angreift.

15. Kraftfahrzeug mit einer Betätigungseinheit (1) zum Betätigen einer Kupplung, wobei die Betätigungseinheit (1) nach einem der vorangehenden Ansprüche ausgebildet ist.

## Claims

1. Actuating unit (1) for a clutch comprising a drive unit (2), an actuating element (5) for actuating the clutch, and a transmission unit (3) for transmitting a torque which is generated by way of the drive unit (2) to the actuating element (5), the transmission unit (3) comprising a wear compensation mechanism (10), by way of which the engagement position of the actuating element (5) can be adapted to the wear state of the clutch, **characterized in that** the lever arm between the transmission unit (3) and actuating element (5) increases in size with a change in the engagement position on account of a wear compensation adaptation.

2. Actuating unit according to Claim 1, **characterized in that** the transmission unit (3) acts on the actuating element (5) at an action position which is variable during the rotational movement of the connecting element (42, 44).

3. Actuating unit according to either of the preceding claims, **characterized in that** the transmission unit (3) comprises a connecting element (9) which is of disc-shaped configuration and has at least one projection (42, 44) on the side of the actuating element (5).

4. Actuating unit according to Claim 3, **characterized in that** the projection (42, 44) is pin-shaped.

5. Actuating unit according to Claim 3 or 4, **characterized in that** two projections (42, 44) are provided which are spaced apart equally from the rotational axis of the connecting element (9).

6. Actuating unit according to Claim 3 or 4, **characterized in that** two projections (42, 44) are provided which are spaced apart to different extents from the rotational axis of the connecting element (9).

7. Actuating unit according to one of Claims 3 to 6, **characterized in that** the actuating element (5) has at least one recess (52, 54) for at least temporarily receiving (42, 44) the connecting element (9) of the transmission unit (3).

8. Actuating unit according to Claim 7, **characterized in that** the recess (52, 54) is configured in the form of a slot.

9. Actuating unit according to Claim 7, **characterized in that** the recess (52, 54) is configured in the form of a slot which is open towards one side.

10. Actuating unit according to one of Claims 7 to 9, **characterized in that** the longitudinal direction of the recess (52, 54) is arranged perpendicularly with respect to the longitudinal direction of the actuating element (5) .

11. Actuating unit according to one of Claims 7 to 10, **characterized in that** the actuating element (5) has an annular reinforcement (58) which is arranged perpendicularly with respect to the rotational axis of the connecting element (9) of the transmission unit (3).

12. Actuating unit according to one of Claims 3 to 11, **characterized in that** the connecting element (9) has a cylindrical form, and a wrap spring (10) with a plurality of windings is wound around the outer side.

13. Actuating unit according to one of Claims 3 to 12, **characterized in that** the connecting element (9) is mounted in a gearwheel segment (8), the gearwheel segment (8) having the same rotational axis as the connecting element (9).

14. Actuating unit according to Claim 13, **characterized in that** the transmission unit (3) has a compensation spring unit (4) which acts on the gearwheel segment (8).

15. Motor vehicle with an actuating unit (1) for actuating a clutch, the actuating unit (1) being configured according to one of the preceding claims.

## Revendications

1. Unité d'actionnement (1) pour un embrayage, comportant une unité d'entraînement (2), un élément d'actionnement (5) pour l'actionnement de l'embrayage et une unité de transmission (3) pour la transmission d'un couple généré par l'unité d'entraînement (2) à l'élément d'actionnement (5), l'unité de transmission (3) comportant un mécanisme de compensation d'usure (10) au moyen duquel la position d'enclenchement de l'élément d'actionnement (5) peut être adaptée à l'état d'usure de l'embrayage, **caractérisée en ce que** le bras de levier entre l'unité de transmission (3) et l'élément d'actionnement (5) augmente avec le changement de la position d'enclenchement dû à une adaptation de compensation d'usure.

2. Unité d'actionnement selon la revendication 1, **caractérisée en ce que** l'unité de transmission (3) entre en prise avec l'élément d'actionnement (5) à une position d'entrée en prise qui peut être modifiée pendant le mouvement rotatif de l'élément de liaison (42, 44).

3. Unité d'actionnement selon l'une des revendications précédentes, **caractérisée en ce que** l'unité de transmission (3) comporte un élément de liaison (9) qui est réalisé en forme de disque et comprend au moins une saillie (42, 44) sur le côté de l'élément d'actionnement (5) .

4. Unité d'actionnement selon la revendication 3, **caractérisée en ce que** la saillie (42, 44) est en forme de goupille.

5. Unité d'actionnement selon la revendication 3 ou 4, **caractérisée en ce que** deux saillies (42, 44) sont prévues, lesquelles sont situées à la même distance de l'axe de rotation de l'élément de liaison (9).

6. Unité d'actionnement selon la revendication 3 ou 4, **caractérisée en ce que** deux saillies (42, 44) sont prévues, lesquelles sont situées à des distances différentes de l'axe de rotation de l'élément de liaison (9) .

7. Unité d'actionnement selon l'une des revendications 3 à 6, **caractérisée en ce que** l'élément d'actionnement (5) comprend au moins un évidement (52, 54) pour la réception au moins par intermittence d'une saillie (42, 44) de l'élément de liaison (9) de l'unité de transmission (3).

8. Unité d'actionnement selon la revendication 7, **caractérisée en ce que** l'évidement (52, 54) est réalisé sous la forme d'un trou oblong.

9. Unité d'actionnement selon la revendication 7, **caractérisée en ce que** l'évidement (52, 54) est réalisé sous la forme d'un trou oblong ouvert d'un côté.

10. Unité d'actionnement selon l'une des revendications 7 à 9, **caractérisée en ce que** la direction longitudinale de l'évidement (52, 54) est disposée perpendiculairement à la direction longitudinale de l'élément d'actionnement (5) .

11. Unité d'actionnement selon l'une des revendications 7 à 10, **caractérisée en ce que** l'élément d'actionnement (5) comprend un renforcement annulaire (58) qui est disposé perpendiculairement à l'axe de rotation de l'élément de liaison (9) de l'unité de transmission (3).

12. Unité d'actionnement selon l'une des revendications 3 à 11, **caractérisée en ce que** l'élément de liaison (9) présente une forme cylindrique et un ressort hélicoïdal (10) à plusieurs spires est enroulé autour du côté extérieur.

13. Unité d'actionnement selon l'une des revendications 3 à 12, **caractérisée en ce que** l'élément de liaison (9) est monté dans un segment de roue dentée (8), le segment de roue dentée (8) présentant le même axe de rotation que l'élément de liaison (9).

14. Unité d'actionnement selon la revendication 13, **caractérisée en ce que** l'unité de transmission (3) comprend une unité à ressort de compensation (4) qui vient en prise avec le segment de roue dentée (8).

15. Véhicule automobile comportant une unité d'actionnement (1) pour l'actionnement d'un embrayage, l'unité d'actionnement (1) étant réalisée selon l'une des revendications précédentes.
